# EUROPEAN PATENT APPLICATION

(11) **EP 2 416 296 A2**
(43) Date of publication of application: **08.02.2012**
(21) Application number: 11176169.8
(22) Date of filing: 01.08.2011
(51) Int. Cl.: G07C 5/08, G07C 5/00, G05B 23/02

(54) **Method of providing vehicle information and service**

(30) Priority: 02.08.2010 US 848291
(71) Applicant: The Goodyear Tire & Rubber Company, Akron, OH 44316-0001 (US)
(72) Inventor: Suh, Peter Jung-min, Copley, OH Ohio 44321 (US); Lotliker, Darshan Balkrishna, Cuyahoga Falls, OH Ohio 44223 (US)
(74) Representative: Kutsch, Bernd

(57) **Abstract**

A method of providing safety and maintenance vehicular service includes the steps: capturing information indicative of a vehicle status parameter electronically by means of a vehicle monitoring system; transmitting captured information through at least one vehicle connectivity system; transmitting captured information from the vehicle connectivity system to at least one portable device such as a cell phone and/or GPS unit; activating the portable device; activating analytical software utilized by the portable device; analyzing the captured information by the analytical software of the portable device; and conveying by sensory means useful processed information based upon captured information analysis to a user located within the vehicle. Advance communication of the processed information (e.g. identifying the service required) to at least one vehicle service provider externally located to the vehicle can be initiated and advance preparation of a job order and payment may be concluded online to expedite the repair procedure.

## Description

### Field of the Invention

The invention relates generally to vehicle maintenance and, more particularly, to an information management system for assisting a vehicle operator in making and implementing an informed decision in particular regarding maintenance of the vehicle.

### Background of the Invention

It is well documented that maintaining a vehicle is important for vehicle safety, vehicle performance, and vehicle longevity. Information useful to vehicle operation and maintenance includes tire pressure, mileage, treadwear, and vehicle oil change history.

Certain systems have been devised and implemented to assist in providing a vehicle operator with relevant vehicle information for maintenance purposes. Vehicle information systems have evolved over time to provide vehicle self-diagnostic services and give the vehicle owner/operator or a repair technician access to sate of health information of various vehicle sub-systems. Such information is typically available and accessible on demand for diagnostic analysis of vehicle state of health or vehicle repair. Access to the diagnostic information for repair purposes is an effective tool and has improved the efficiency of making needed vehicle repairs. While information from vehicle systems is useful for repair purposes, there remains a need for an improved method of using such information for warning and maintenance service.

### Summary of the Invention

The invention relates to a method of providing a vehicular service in accordance with claim 1.

Dependent claims refer to preferred embodiments of the invention.

According to one preferred aspect of the invention, a method of providing safety and maintenance vehicular service includes the steps: capturing information indicative of a vehicle status parameter electronically by means of a vehicle monitoring system; transmitting captured information through at least one vehicle connectivity system; transmitting captured information from the vehicle connectivity system to at least one portable device such as a cell phone and/or GPS unit; activating the portable device; activating analytical software utilized by the portable device; analyzing the captured information by the analytical software of the portable device; and conveying by sensory means useful or relevant processed information based upon captured information analysis to a user located within the vehicle. In a further aspect, the step of communicating the processed information to at least one vehicle service provider externally located to the vehicle is included.

In another aspect of the invention, the step of activating analytical software utilized by the portable device is initiated automatically by transmission of captured information from the vehicle connectivity system to the portable device and is in real-time by means of Bluetooth-based communication. The connectivity between the vehicle system and the portable device(s) may either be by means of a vehicle original equipment manufacturer ("OEM") provided connectivity system or a post-manufacture installed on-board diagnostic message capturing device ("OBD II").

According to a further aspect of the invention, the method may include the steps of identifying to the user a list of vehicle service provider options within a geographic range of the vehicle; advising the user of vehicle service and product offering options commercially offered by the list of vehicle service provider options; selecting by the user at least one preferred service provider from the list of service provider options and at least one preferred service and product option from the preferred service provider; and communicating a selective part of the useful processed information to the at least one preferred service provider in advance of an arrival of the vehicle to a location of the preferred service provider.

### Brief Description of the Drawings

The invention will be described by way of example and with reference to the accompanying drawings in which:
FIG. 1 is a schematic representation of a vehicle equipped for the practice of the method.
FIG. 2 is a flow chart representation of the method for an exemplary tire service application.

### Detailed Description of the Invention

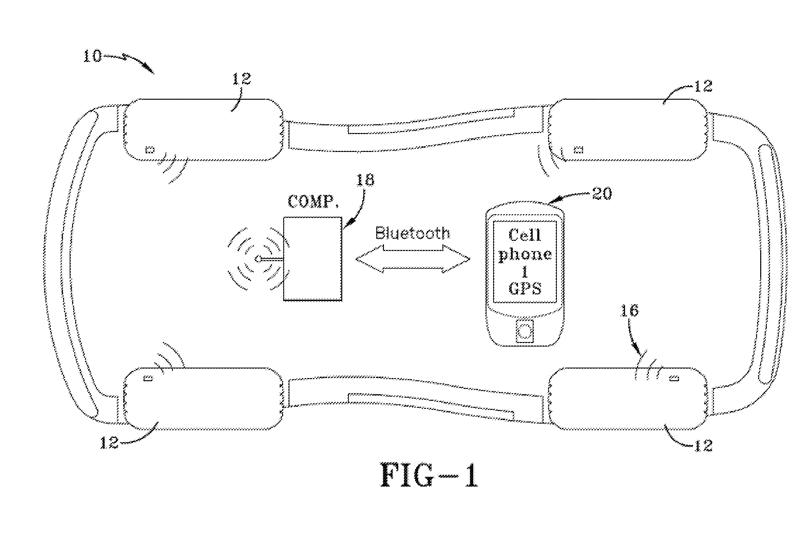

Referring to FIG. 1, the subject method is practiced in the provision of maintenance information and service to a vehicle 10. The methodology applies to commercial or passenger vehicles having a tire 12 or a tire platform. The tires 12 supporting the vehicle 10 may be equipped with sensing devices and/or electronic tags which store tire and vehicle based data and may provide tire monitoring by means of tire pressure monitoring devices.

Tire pressure monitoring systems have been developed and are in increasing use. Such systems typically comprise a sensor located in the tire to perform real-time interior air pressure and temperature monitoring. The information is wirelessly transmitted as shown at 16 of FIG. 1 to the driver via radio frequencies ("RF") and may be displayed in the driver compartment of the vehicle. The remote sensing module consists of a tire condition monitor, for example, a pressure sensor and/or a temperature sensor, a signal processor, and an RF transmitter. The system may be powered by a battery or the sensing module may be "passive"; that is, power may be supplied to the sensing module by way of magnetic coupling with a remote transmitter that is connected to an electronic control unit ("ECU"). The ECU can either be dedicated to tire pressure monitoring or the on-board vehicle computer that performs other functions in the car. For instance, the ECU could be a dashboard controller or other onboard computer. Examples of such tire monitoring systems are more fully described in US-A- 6,868,358 and US-A- 6,591,671, which patents are hereby incorporated in their entireties by reference herein.

The purpose of a tire monitoring system is to provide the driver with a warning should a pressure anomaly occur in one or more tires. Typically, tire pressure and temperature are reported parameters. To be useful, the information must be quickly communicated and be reliable. Further, simply displaying the tire pressure information does not help a user remedy the situation. Therefore, there is a need for a tire monitoring system that not only displays tire pressure anomalies but also assists the user in satisfactorily resolving those anomalies. Other types of sensors may be employed as well such as tire tread depth indicators and tire-load measuring devices.

The vehicle 10 is typically equipped with an OEM supplied on-board ECU or computer 18 that performs various data storage and diagnostic services for the vehicle. For example, the ECU 18 may convey to the vehicle operator the status of certain vehicle systems and warn by sensory indicia anomalies that may require remedial action. On-board diagnostic ("OBD") services conducted by the vehicle computer 18 may be communicated by visual indicia such as warning lights or audible indicia such as a warning alarm.

The operator or a passenger within the vehicle may bring to the vehicle portable devices 20 such as telephonic (cell phones) devices and/or global positioning monitors (GPS devices). Such portable devices may have incorporated therein voice command capability whereby allowing a vehicle operator to actuate and control the operation of the device hands-free. Such portable devices may be further equipped with commercially available software application programs ("Apps") that can activate the device automatically by remotely transmitted command signal. GPS systems can further be used to access driving directions to designate addresses or access database files for regional service providers within a specified range of the vehicle.

Pursuant to the methodology of the invention, one or more portable devices are linked for data transmission from the ECU 18 by means of "Bluetooth" connectivity. Bluetooth, generically, is a wireless interface specification for communication between devices. In order to use commercially available Bluetooth technology, a device must be compatible with the subset of Bluetooth profiles necessary to use the desired services. A Bluetooth profile resides on top of the Bluetooth Core Specification and additional optional protocols. The way a device 20 uses Bluetooth technology depends on its profile capabilities. The profiles provide standards which manufacturers follow to allow devices 20 to use Bluetooth in the intended manner. Thus, cell phones such as commercially available smart phones that run a range of application programs may be equipped with profile capabilities that allow utilization of Bluetooth communication.

Certain profiles are defined and adopted by the Bluetooth wireless interface, including but not limited to: a Basic Imaging Profile ("BIP") that is designed for sending images between devices; a Cordless Telephony Profile ("CTP") designed for cordless phones to work using Bluetooth; a Dial-up Networking Profile ("DUNP") which provides a standard to access the Internet and other dial-up services over Bluetooth wirelessly; a File Transfer Profile ("FTP") that provides the capability to browse, manipulate and transfer objects of another system; and a Hands-Free Profile (HFP) that allows car hands-free kits to communicate with mobile phones in a car. A Bluetooth car kit allows users with Bluetooth-equipped cell phones to make use of some of the phone's features such as making calls while the phone itself can be left in the user's pocket. Other useful profiles include Phone Book Access Profile ("PBAP") that allows exchange of phone book objects between devices and a Serial Port Profile ("SPP").

Communications between a vehicle ECU and portable devices such as a cell phone and/or a GPS device may be by means of a vehicle connectivity system wired into the vehicle by the vehicle OEM manufacturer. For example, Ford SYNC is one such vehicle connectivity system. The vehicle ECU can transmit selective information to the portable devices and initiate an activation of portable devices such as smart phone/GPS equipped with appropriate software/Apps. Once activated, the software/Apps analyzes the data and provides useful information to the customer such as, without intention of limitation, tire pressure, mileage, oil change history, tire load, and tread depth. Following the analysis, information may be wirelessly communicated to service providers as necessary to remedy tire or other vehicle system anomalies.

Furthermore, warning messages based on information captured by the ECU, such as tire pressure, temperature, tread-depth, or load, may be communicated via Bluetooth to the vehicle user portable device and sensory indicia initiated to inform the user. Such sensory indicia may be a visual display or an audible warning sound. In the event that corrective action is either required, desired, or recommended, turn by turn guidance may be given the user via the portable device to the nearest service center equipped to address corrective measures. For example, information indicating a tire anomaly requiring tire replacement may be captured by the vehicle ECU and transmitted to a user cell phone by Bluetooth interface. The cell phone, equipped with the appropriate Apps. Software, is activated and a warning is given the customer by audible and/or visual indicia. The software programmed into the cell phone then analyzes the data and provides the data in a useful form to the customer/operator. Useful information, for example, in the case of a faulty tire may include tire pressure and tire mileage. The customer then evaluates whether to procure the identity of service providers within a serviceable range of the vehicle by accessing internet data. Upon identifying the list of qualified service providers, a service provider of choice may be selected by the customer. Relevant and useful information concerning the problem to the selected service provider.

The customer/user of the methodology may further purchase tire(s) on line through the creation of an on line job order with the selected service provider. By completing the transaction ahead of time, the tires are ready for installation as soon as the customer reaches the service provider. Alternatively, in the event that service is required or desired on site, communication with the selected service provider can be used to initiate a service call to the location of the vehicle.

The methodology thus is initiated through the capture of required information from the vehicle systems and its transmission to vehicle connectivity systems (e.g. Ford SYNC). A vehicle "health" report is accordingly ascertained. Through Bluetooth connectivity and voice command controlled portable devices actuated by applications programming, the data is evaluated and communicated to the user. Turn-by turn directions to a service provider chosen by the user is possible provided that navigation capability is available to the customer. The dealer locator and tire selector application program allows the user to locate a dealer and select the tire preferred. Through web connectivity (maps, e-commerce) such information is readily available.

The combination of vehicle system captured information communicated to customer portable device may thus be used to display tire pressure and tread wear information on the handheld device. A verbal warning may be given to the customer if appropriate. Tire service advice based on driving behavior, tire selection, and dealer location may be made through the use of web connectivity (maps, e-commerce). Customer voice commands may then be used to make the tire/dealer selections. Turn-by-turn directions to the dealer may be accessed and online purchase and job order creation functions performed prior to arrival at the selected tire service provider.

The above methodology applies to OEM vehicle systems as well as aftermarket systems. For aftermarket application, required information is captured by the vehicle ECU from the vehicle systems by sensors as above. The information data is transmitted to an OBD II port where it is captured by a OBD II message capture device (OBD II device) of a type commercially available. In general, OBD in an automotive context is a generic term referring to a vehicle's self-diagnostic and reporting capability. OBD systems give the vehicle owner or a repair technician access to stat of health information for various vehicle sub-systems. The amount of diagnostic information available via OBD has varied widely since the introduction in the early 1980s of on-board vehicle computers which made OBD possible. Early instances of OBD would illuminate a malfunction indicator light if a problem was detected but would not provide any information as to the nature of the problem. Modern OBD implementations use a standardized fast digital communications port to provide real time data in addition to a standardized series of diagnostic trouble codes ("DTCs") which allow one to rapidly identify and remedy malfunctions within the vehicle. The Society of Automotive Engineers ("SAE") recommends a standardized diagnostic connector and set of diagnostic test signals. The OBD II specification was made mandatory for all cars sold in the United States in 2001.

The OBD II standard specifies the type of diagnostic connector and its pinout, the electrical signaling protocols available, and the messaging format. It also provides a candidate list of vehicle parameters to monitor along with how to encode the data for each. In addition, the OBD II standard provides an extensible list of DTCs. As a result of this standardization, a single device can query the on-board computer(s) in any vehicle.

For aftermarket application of the methodology, data transmitted to the OBD II port of a vehicle is captured by a OBD II device and transmitted to portable devices via Bluetooth as described previously. Activation of the cell phone/GPS software/Apps is initiated automatically with the transmission. The software/Apps in such portable devices then analyze the data as with the OEM system described above. Useful information (e.g. tire pressure, mileage, oil change history) is provided to the customer in a sensory communication (audible/visual) and service providers are identified utilizing web connectivity (maps, e-commerce). As with the OEM system, voice command is utilized to make the tire/dealer selections and turn-by-turn directions to the dealer are received. Online purchase, job order creation, and/or payment provision may be made in advance of repair to save time at the service provider and thereby expedite the repair/service.

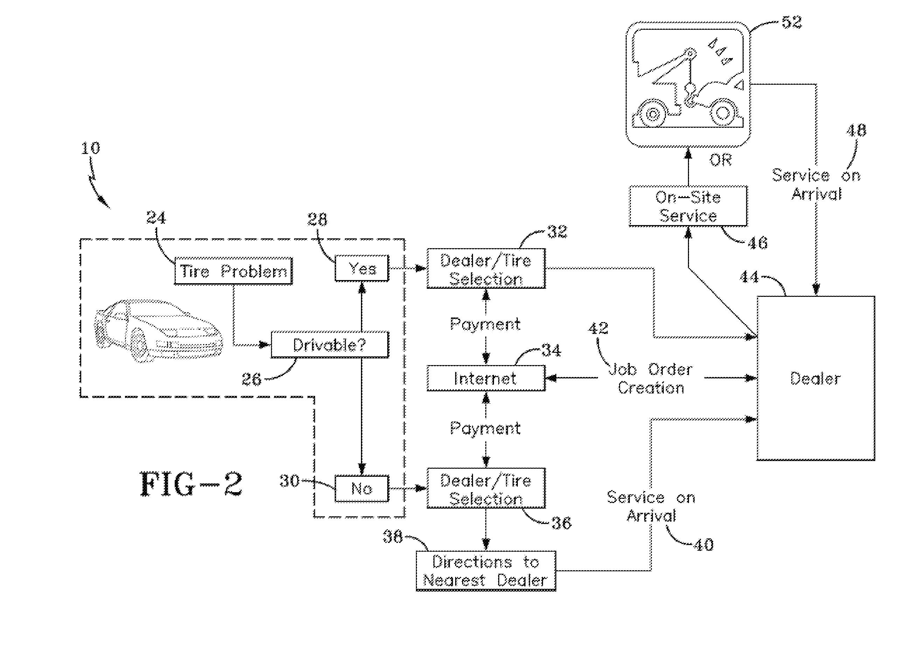

Referring to FIG. 2, the method in OEM and aftermarket applications is represented schematically for the purpose of illustration. Information from vehicle systems related to a tire problem 24 is transmitted to vehicle connectivity systems (e.g. Ford SYNC and GM OnStar) in the case of OEM solution applications, or such information is transmitted to an OBD II port and captured by a OBD II capture device in the case of aftermarket application. ("ONSTAR" is a registered trademark of General Motors Corporation.) The information is transmitted via Bluetooth to a portable device such as a cell phone/GPS unit within the vehicle. The portable device is thereupon activated by software/Apps and the data analyzed by software/Apps to determine the nature of the problem. The operator of the vehicle is notified as to the nature of the tire problem and makes a decision 26 as to whether the vehicle is driveable 28 or not 30.

If driveable (e.g.. the repair can be safely scheduled without urgency), the customer/operator of the vehicle solicits dealer/tire options utilizing the portable device (GPS, web connectivity such as maps, e-commerce); and makes a selection 32 of the dealer and tire of choice on the basis of "non-emergency" criteria. Information relating to the tire problem 24, the tire selection made by the customer, and an appointment to make the repair is transmitted to the dealer 44 chosen who then takes inventory to ensure the selected tire is available for the needed repair at the scheduled appointment time. Payment can be accommodated via the internet 34 if so desired to expedite the repair process. A job order 42 may likewise be generated by internet communication to document the repair work order and billing details.

In the event the analysis indicates that the vehicle is not drivable 30 (e.g. the repair must be made as soon as possible), the dealer/tire selection 36 is made utilizing the portable device(s) on an "emergency" basis and a selection 36 of a dealer/tire is made. Directions to the (most likely) nearest dealer 38 are obtained by web connectivity and service on arrival 40 is arranged with the service provide so selected. Payment via the internet 34 and a job order creation 42 may also be arranged. If the nature of the tire problem is such that the vehicle 10 cannot be safely driven to the nearest dealer, on-site service 46 or towing of the vehicle 52 for service on arrival 48 may be arranged through the dealer 44 chosen.

From the forgoing, it will be appreciated that subject system architecture provides automatic, real-time information and advice. OnStar system architecture is based upon user intervention/request and, accordingly, is not automatic and does not provide for user notification, information, and advice in real-time. The OEM SYNC system creates a flow of information in the opposite direction. That is, the user makes a request and actuates the system. In contrast, the subject system is a product based system in that the system actuates the portable remote device and informs the user of anomalies or issues that will be of interest to the user. As to aftermarket applications, the subject system architecture provides for the capture of information by an OBD II device with Bluetooth activation of portable device(s) by cell phone/GPS software.

From the forgoing, it will be appreciated that the subject method provides a convenient, readily implemented, and accessible system of providing a vehicle user safety and maintenance vehicular service. The method includes the steps: capturing information indicative of a vehicle status parameter electronically by means of a vehicle monitoring system; transmitting captured information through at least one vehicle connectivity system; transmitting captured information from the vehicle connectivity system to at least one portable device such as a cell phone and/or GPS unit; activating the portable device; activating analytical software utilized by the portable device; analyzing the captured information by the analytical software of the portable device; and conveying by sensory means useful processed information based upon captured information analysis to a user located within the vehicle. By inclusion of an additional step of communicating the processed information to at least one vehicle service provider externally located to the vehicle, the method can initiate communication between the vehicle operator and a service provider before the vehicle arrives at the dealer location or the dealer arrives at the vehicle location.

Additionally, by activating analytical software utilized by the portable device automatically by transmission of captured information from the vehicle monitoring system to the portable device in real-time by means of Bluetooth-based communication, the vehicle operator is automatically kept apprised of status changes to monitored vehicle parameters that may require remedial attention. The connectivity between the vehicle system and the portable device(s) may either be by means of a vehicle OEM-provided connectivity system or a post-manufacture installed OBD II message capturing device, making the system suitable for OEM implementation and post-manufacture utilization.

Moreover, through the steps of identifying to the user one or more vehicle service provider options qualified to attend to needed repairs, the vehicle operator is equipped to select a suitably located service provider within a geographic range of the vehicle. In the event of an emergency situation, the proximity of the service provider will be relatively more important while, in the case of a non-emergency case, greater discretion by the user in the selection of a service provider is possible. In advising the user of vehicle service and product offering options commercially offered by the vehicle service provider selected, the user can determine the qualifications of the service provider for the service required.

Additionally, advance communication between the vehicle operator and the selected service provider is possible with the system described herein. On line purchase of parts such as tires and online job order creation as well as payment can be made before the vehicle and service provider meet, expediting the process of repair.

It should also be noted and appreciated that the subject method can arrange for car repairs ahead of car arrival to a repair facility. In addition, information generated may be used to order parts by the customer for delivery to the customer's address. For example, when a faulty headline bulb is detected, a replacement bulb may be ordered and shipped to the vehicle operator's home address. Payment can be made for the part at the same time it is ordered.

## Claims

1. A method of providing a vehicular service, the method comprising the steps:
(A) capturing information electronically from a vehicle monitoring system;
(B) transmitting captured information through at least one vehicle connectivity system;
(C) transmitting captured information from the vehicle connectivity system to at least one portable device;
(D) activating the portable device;
(E) activating software utilized by the portable device;
(F) analyzing the captured information by the software of the portable device; and
(G) conveying by sensory means relevant processed information based upon captured information analysis to a user located within the vehicle.

2. The method according to claim 1 further comprising the step of wirelessly communicating the processed information to at least one vehicle service provider externally located to the vehicle.

3. The method according to claim 1 or 2 wherein the portable device is selected from the group consisting of telephonic devices and global positioning system devices.

4. The method in accordance with at least one of the previous claims wherein the captured information is indicative of at least one vehicle status parameter selected from the group consisting of tire pressure, tire mileage, tire load, vehicle oil change history and vehicle operational diagnostic status.

5. The method in accordance with at least one of the previous claims wherein the step of activating software utilized by the portable device is initiated automatically by transmission of captured information from the vehicle connectivity system to the portable device.

6. The method in accordance with at least one of the previous claims wherein the captured information is transmitted to by means of an on-board diagnostic message capturing vehicle port.

7. The method in accordance with at least one of the previous claims wherein transmission of information from the vehicle connectivity system to activate the portable device is in real-time by means of Bluetooth-based communication, in particular by means of Bluetooth-based communication from the on-board diagnostic message capturing vehicle port.

8. The method in accordance with at least one of the previous claims wherein the step of conveying by sensory means relevant processed information to a user within the vehicle is responsive to the transmission of captured information-initiated activation of the portable device.

9. The method in accordance with at least one of the previous claims wherein the at least one vehicle connectivity system is an vehicle original equipment manufacturer provided connectivity systems or a system comprising post-manufactured installed on-board diagnostic message capturing devices.

10. The method in accordance with at least one of the previous claims wherein the captured information is indicative of at least one vehicle status parameter selected from the group consisting of tire pressure, tire mileage, tire load, vehicle oil change history and vehicle operational diagnostic status.

11. The method in accordance with at least one of the previous claims further comprising the steps:
identifying to the user at least one vehicle service provider option within a geographic range of the vehicle; and
advising the user of vehicle service and product offering options commercially offered by the one vehicle service provider option.

12. The method in accordance with at least one of the previous claims further comprising the steps:
selecting by the user at least one preferred service and product option offered by the service provide option; and
communicating a selective part of the relevant processed information to the at least one service provider option in advance of an arrival of the vehicle to a location of the service provider option.

13. The method in accordance with at least one of the previous claims further comprising communicating job order information related to the at least one service and product option to the at least one service provider option.

14. The method in accordance with claim 13 wherein the job-order information is selected from the group consisting of authorized job services requested, service location, and payment provisions.

15. The method in accordance with at least one of the previous claims wherein the step of communicating the processed information to at least one service provider option is by means of the portable device.
